# EUROPEAN PATENT SPECIFICATION

(11) **EP 3 405 776 B1**
(45) Date of publication and mention of the grant of the patent: **06.07.2022**
(21) Application number: 17707086.9
(22) Date of filing: 18.01.2017
(51) Int. Cl.: G01N 21/892

(54) **YARN IMAGING DEVICE**
GARNBILDGEBUNGSVORRICHTUNG
DISPOSITIF D'IMAGERIE DE FIL

(30) Priority: 22.01.2016 GB 201601213
(43) Date of publication of application: 28.11.2018
(73) Proprietor: MG Sensors Limited, Prestbury, Cheshire SK10 4DN (GB)
(72) Inventor: HINCHLIFFE, Malcolm, Congleton Cheshire CW12 2JZ (GB); BROOKES, Glenn, Congleton Cheshire CW12 2JZ (GB)
(74) Representative: Appleyard Lees IP LLP
(86) International application number: PCT/GB2017/000006
(87) International publication number: WO 2017/125712

(56) References cited:
- EP-A1- 1 229 323
- EP-A2- 2 827 132
- US-A1- 2001 022 656
- US-B1- 6 201 602
- Anonymous: "Active pixel sensor", Wikipedia, 25 October 2016 (2016-10-25), XP055317772, Retrieved from the Internet: URL:https://en.wikipedia.org/w/index.php?t itle=Special:Book&bookcmd=download&collect ion_id=3c8817fbca6b8c9e9fbb5be052baa064ee2 96db1&writer=rdf2latex&return_to=Active+pi xel+sensor [retrieved on 2016-11-09]
- Wikipedia: "Shutter (photography) - Wikipedia", , 8 June 2021 (2021-06-08), XP055811781, Retrieved from the Internet: URL:https://en.wikipedia.org/wiki/Shutter_ (photography) [retrieved on 2021-06-08]

## Description

### FIELD OF THE INVENTION

The present invention broadly relates to the field of textile quality control and particularly relates to a yarn imaging device for characterizing an elongate, textile product to be tested. Such devices are typically applied to a wide range of textile processing machines. The elongate textile product to be tested is typically of either continuous filament yarn or staple yarn, but may also be precursor to such yarns such as sliver or a roving. For the continuous filament yarn, the present invention may be used in draw-texturing Machines, Partially Oriented Yarn (POY) and Fully Drawn Yarn (FDY) extrusion machines, Bulk Continuous Yarn (BCF) and Tire Cord Yarn extrusion and processing machines and Air textured Yarn (ATY) processing machines. For the staple yarn, the present invention may be used in open end spinning machines, vortex spinning machines, and high speed automatic winding and coning machines.

### BACKGROUND ART OF THE INVENTION

Use of sensors to directly measure yarn characteristics is well established in textile industry. The sensors may be used during yarn manufacturing, processing or may be used in winding machines or testing equipment. A range of different sensor types are used for these applications utilising various measurement methods, including capacitance and optical techniques. The sensors monitor the yarn or other elongate material (herein after referred to as "yarn") to determine one or more characteristics of the yarn as it passes through the sensor, thereby enabling characterisation of the yarn. For continuous filament yarn, the characteristics include, but are not limited to, entanglement or interlace measurement, denier or denier variation measurement, broken filament / slub measurement, twist, and air textured yarn bulk characteristics and variation. For staple fibre yarns the characteristics include, but are not limited to, yarn count or titre and short term variations in this yarn count that are classified amongst other things as slubs, neps, thick places, thin places and hairiness. Additionally the same sensor may monitor the yarn for foreign matter which may be of a same material of a different colour from the yarn being processed, a different material that is of the same or similar colour (such as a white plastic in a white cotton yarn), or a different material that is also a different colour. However, in each case, the foreign matter may not change the profile of the yarn sufficiently to be identified simply by monitoring variation in the yarn profile.

The capacitance sensors characterise the size of a yarn bundle by measuring an effect of the yarn on capacitance of a measurement zone of the sensor which may include yarn-guides. However, the capacitance sensor suffers a number shortcomings including:
- Sensitivity of the measurement to the moisture, either in the yarn, or humidity changes in the atmosphere
- Measurement resolution is limited by the size of the sensor head and is typically > 2mm
- Measurement is analogue and prone to drift from calibrated values

The optical sensors characterise the profile of the yarn bundle by measuring the size of either or both the shadowed and reflected image of the yarn. A majority of the optical sensors in commercial use are analogue sensors that use LED illumination and photodiodes or phototransistors to measure the magnitude of the shadow or the reflected image. However, the optical sensors face a number of shortcomings including:
- Measurement is sensitive to contamination of the optics and sophisticated techniques are required to overcome this
- Measurement resolution is limited by the optical resolution and typically is > 3mm
- Measurement is analogue

Digital optical sensors are known, comprising a photodiode array, where the yarn image is shadowed on to said array. However, the digital optical sensors are not used in large commercial volumes due to high cost, poor resolution, complexity, and limited data acquisition and processing rates.

Sensors can also monitor the yarn for foreign matter within said yarn. This is typically achieved by comparing at least two different measurements of the yarn profile. This may involve monitoring the yarn with a capacitance sensor and also with an optical sensor using the reflection technique. If there is a difference between the two measurements, it indicates that the foreign matter is present. Further, comparing measurements with different wavelengths of light enables different types of foreign matter to be identified.

A similar measurement of foreign matter may be achieved using only optical sensors by comparing the profiles in shadow and reflected methods. The output signal from the sensors is continuously evaluated with predefined assessment criteria to enable the characterisation of the yarn quality in a manner that is well established for each sector of the textile industry. For example, in the staple yarn sector, assessment criteria are usually defined in the form of a clearing limit or clearing curve in a two-dimensional classification field or event field, which is spanned on the one hand by the length of the event and on the other hand by the amplitude of the event, e.g. a deviation of the yarn mass from a desired value. Events below the clearing limit are tolerated, and events above the clearing limit are removed from the yarn or at least registered as defect places.

EP 2827132 A2 is background art and discloses a CMOS optical detector comprising a plurality of optical elements for monitoring parameters of moving yarn on textile machines.

EP 1229323 A1 is background art and discloses a method of and device for detecting extraneous fibres in a yarn.

US 6,201,602 B1 is background art and discloses the detection of foreign fibres and foreign materials based on an absorption measurement of light and corresponding detection method.

US 2001/0022656 A1 is background art and discloses a method and device for the optical detection of foreign fibres and other impurities in a longitudinally travelling yarn.

Therefore, there is a need for a yarn imaging device that determines characteristics of a yarn solving at least one of the aforementioned problems.

### SUMMARY OF THE INVENTION

The objective of the present invention is to determine characteristics of a yarn.

In accordance with a first aspect, the present invention provides a yarn imaging device as set out in accompanying claim 1. The yarn imaging device comprising one or more sensing groups, wherein each sensing group includes: at least one illumination source for illuminating the yarn; and, at least one digital image sensor positioned in such a way that said digital image sensor generates an image of the yarn for determination of yarn characteristics.

Accordingly, the present invention provides a yarn imaging device comprising one or more sensing groups. Each sensing group includes one or more illumination sources for illuminating the yarn and one or more digital image sensors for generating a yarn image. The yarn is positioned in a field of view of said sensing groups and the characteristics of the yarn are determined based on the generated yarn image. These characteristics of the yarn include, but are not limited to, diameter, density, evenness, bulk, broken filaments, neps, hairiness, yarn profile, and colour response of the yarn.

Each digital image sensor has a rolling shutter. A global shutter is also disclosed but is outside the present invention.

Each digital sensor may include a lens for focussing the yarn image, and/or to provide a predetermined level of magnification of the yarn. The yarn imaging device may further include a transparent cover enclosing the sensing group to provide contamination protection for the digital image sensors.

In an embodiment of the present invention, the yarn imaging device includes two digital image sensors that operate with frame timings out-of-phase (herein after referred to as "out-of-phase"), i.e., the second digital image sensor images the yarn during the image acquisition gap of the first digital image sensor and vice versa. This enables continuous and uninterrupted imaging of the yarn.

In another embodiment of the present invention, the yarn imaging device further includes an illumination source positioned behind the yarn to create a shadowed image of the yarn.

An alternative embodiment of the yarn imaging device further includes a background surface positioned behind the yarn whereby the colour and texture of said background surface is selected to generate a predetermined contrast in the yarn image.

In an alternative embodiment, the illumination sources are positioned in such a way that the illumination sources generate a uniformly illuminated reflected image of the yarn.

In yet another embodiment of the present invention, the yarn imaging device includes multiple sensing groups each with illumination source operating at different illumination wavelength, and the difference between the yarn images is used for identification of foreign matter within the yarn. The present invention also provides the uses of the inventive yarn imaging devices set out in claims 12 and 13 and the method of determining the characteristics of a yarn set out in claim 14.

### BRIEF DESCRIPTION OF THE DRAWINGS

Reference will be made to embodiments of the invention, examples of which may be illustrated in the accompanying figures. These figures are intended to be illustrative, not limiting. Although the invention is generally described in the context of these embodiments, it should be understood that it is not intended to limit the scope of the invention to these particular embodiments:
Figure 1 shows a perspective schematic view of a yarn imaging device with a single sensing group and yarn-guides according to an embodiment of the invention;
Figure 2 shows an elevation view of the yarn imaging device of Figure 1 according to an embodiment of the invention;
Figure 3 shows a sectional view at X-X of the yarn imaging device of Figure 2according to an embodiment of the invention;
Figure 4 shows a yarn imaging device with a single sensing group and two pairs of illumination sources having different wavelengths of light according to another embodiment of the invention;
Figure 5 shows a yarn imaging device with two sensing groups each with illumination sources having different wavelengths of light according to yet another embodiment of the invention;
Figure 6 shows a yarn imaging device with an illumination source behind the yarn to create a shadow of the yarn on the digital image sensor according to yet another embodiment of the invention; and,
Figure 7 shows an image of a yarn running across a digital image sensor with a rolling shutter with the yarn image crossing image rows of the digital image sensor.

### DETAILED DESCRIPTION OF THE INVENTION

Although specific terms are used in the following description for the sake of clarity, these terms are intended to refer only to the particular structure of the invention selected for illustration in the drawings, and are not intended to define or limit the scope of the invention.

References in the specification to "one embodiment" or "an embodiment" member that a particular feature, structure, characteristics, or function described in connection with the embodiment is included in at least one embodiment of the invention. The appearances of the phrase "in one embodiment" in various places in the specification are not necessarily all referring to the same embodiment.

In general, the present invention provides a yarn imaging device for the measurement of characteristics of a yarn or thread (herein after referred to as 'yarn') in textile processing or similar industries.

According to embodiments of the present invention, one or more digital image sensors and at least one illumination source (hereinafter referred to as "sensing group") are located within the yarn imaging device and adapted in a manner such that a direct illumination from an LED, laser or light pipe, or an indirect reflected Illumination (hereinafter referred to as "illumination source")illuminates either the yarn or the image background (hereinafter referred to as "background surface") to ensure a clear yarn image in contrast to the background surface.

In an embodiment, the yarn image is viewed directly by the digital image sensors. In another embodiment, a lens is used to focus the yarn image on to a digital image sensor and/or appropriately enlarge or reduce the yarn image to allow optimum resolution for the analysis of the yarn image.

According to the present invention, the geometry of the yarn through the yarn imaging device is controlled to ensure that the yarn is presented in manner that ensures that the yarn path is located in the field of view of the sensing groups. Said geometry is controlled either by static yarn-guides within the yarn imaging device, or by accurate location of the yarn imaging device within the machine, thus using the yarn geometry within the machine to control the yarn path through the yarn imaging device.

With this arrangement, as the yarn passes through the yarn imaging device, the yarn image can be measured in respect of yarn profile and colour response. The variation in these characteristics can be determined from analysis of the yarn image as it tracks across the sensing group. The data indicative of said characteristics may then be output from the yarn imaging device as analogue signals, digital signals or a communication output.

The yarn imaging device functions with any suitable digital image sensor, however, the measurement resolution is dependent upon the size and resolution of the digital image sensor, the properties of any lenses used together with the profile size or titre of the yarn being monitored. In an example, these parameters are normally optimised in the specific embodiment of the device to provide a measurement resolution in the range of 0.1% to 1% of the yarn profile size.

The measurement sampling rates of the yarn imaging device can also be optimised for specific applications to provide the required measurement resolution along the length of the yarn. In an example, with a yarn running at 200m/min a yarn image can be taken every 1mm with a sampling rate of 3,333 samples per second. Across the range of applications the yarn speed and resolution requirements require a device with a sampling rate in the range of 500 to 100,000 samples per second. However, as the frame rates of cost effective digital image sensors are typically between 20 and 100 fps, the response of these digital image sensors is inadequate for the majority of applications. Whilst higher frame rates can be achieved with sophisticated and expensive digital image sensors, a much more cost effective solution is to use digital image sensors with a rolling shutter. The rolling shutter digital image sensors have frame rates that are similar to the global shutter devices. In rolling shutter digital image sensors, each image row is processed sequentially in the direction of the rolling shutter within each frame update cycle with said image row comprising a line of photo-sites or photocells that are exposed and processed simultaneously.

According to the present invention, to fully benefit from the use of the rolling shutter digital image sensor, the yarn path is arranged such that as it moves through the yarn imaging device, the yarn image generated on the digital image sensor crosses the image rows of the digital image sensors. With this arrangement, the yarn image profile of the yarn can be determined as each image row is processed by said rolling shutter digital image sensor, providing an update rate of the yarn profile image measurement equal to the line rate of the digital image sensor where the line rate is approximately equal to the frame rate multiplied by the number of image rows on the sensor.

In an example, with a typical sensor comprising 480 lines and operating at 30 frames per second, the line rate is in excess of 14,000 lines per second, which equates to an effective sampling rate of greater than 14,000 samples per second. Further, much higher sampling rates are possible with higher resolution digital image sensors and/or higher frame rates.

It would be understood to a person of skill in the art that typical digital image sensors exhibit behaviour during vertical synchronisation where image capture is disabled for a short period, leading to a small gap in data acquisition, which is referred to as an "acquisition gap". Generally, the acquisition gap is approximately 2ms for a digital image sensor having 480 lines operating at 30 frames per second. According to the present invention, in applications where the duration of the acquisition gap is unacceptable, two or more digital image sensors can be used to operate out-of-phase such that the acquisition gap of a first digital image sensor is covered by a second digital image sensor and vice versa, thereby providing continuous and uninterrupted sampling at the line rate of the digital image sensors. The technique of two or more sensors operating out-of-phase can also be applied to global shutter devices.

In applications where identification of foreign matter in the yarn is important, the yarn imaging device has further benefits. When said foreign matter is of a different colour in white light to the colour of the yarn being processed, the colour sensitive digital image sensor can directly identify such foreign matter when operating in the reflected light mode. Said foreign matter can be identified by analysis of the signal by either looking for a shift in the mean colour during each line scan or specifically identifying pixels that are outside defined colour limits.

Further, when said foreign matter is of a similar colour to that of the yarn being processed, the foreign matter can by identified by illuminating the yarn by an alternative illumination source with light of a wavelength that is optimised to differentiate said foreign matter from that of the yarn within the yarn image, either directly within a single image, or by comparing the two or more images.

In one embodiment, the alternative illumination source may be used within the same sensing group together with the original illumination source, being mixed together with the original illumination source, or switched with original illumination source.

In a further embodiment of the yarn imaging device, two or more sensing groups are used, where one of these groups uses the original illumination source and the other sensing groups uses alternative illumination sources. In said embodiment the additional sensing groups may be within the same housing as the original sensing group, or alternatively in a separate housing.

Whilst the device accuracy is not affected by moderate contamination of the sensor, in some operational situations the level of contamination may reduce the light transmission to the digital image sensor to an extent that it affects the reliability of the determination of the yarn characteristics. In such situations, the yarn imaging device may simply indicate through an output that cleaning is required. Alternatively automatic cleaning may be incorporated either in the digital image sensor housing or as an additional feature.

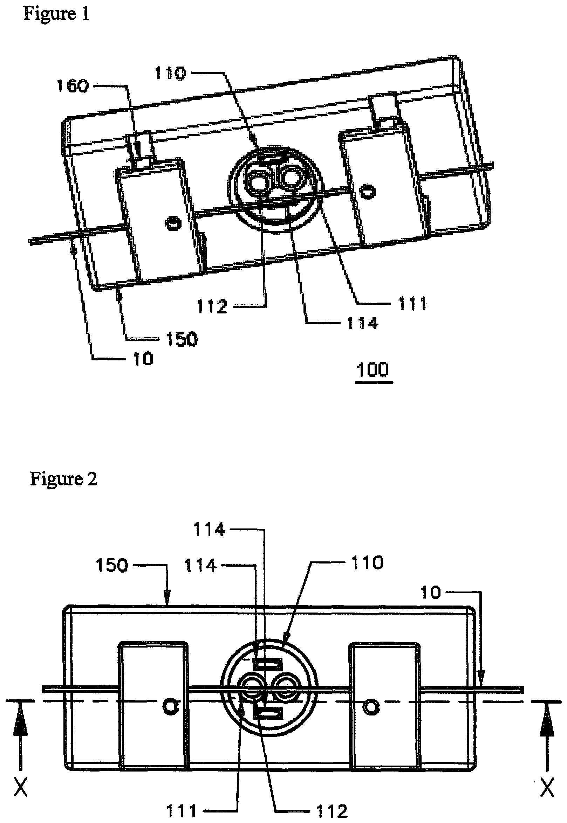

Referring Figures 1 to 3 show a yarn imaging device (100) in accordance with one of the preferred embodiments of the invention with a single sensing group (110) including digital image sensors (111), with lenses (112) and illumination source (114), said sensing group (110) is mounted in a housing (150) which further includes yarn-guides (160) to control passage of a yarn (10) across the field of view of the digital image sensors (111). The digital image sensors (111) are mounted on a circuit board (180) whereon a part of the controller has not been shown for clarity purpose. A person skilled in the art can easily understand working of the controller and hence, is not required to be described in detail.

The yarn imaging device (100) further includes a background surface (170) positioned behind the yarn (10).The background surface (170) has a colour and/or a surface texture that is selected to provide optimum contrast with the yarn image. The contrast of the yarn (10) relative to the background surface (170) facilitates the determination of the yarn profile and increases accuracy of the yarn profile. It may be understood to a person of ordinary skill in the art that the contrast between the yarn (10) and the background surface (170) is dependent on the colour of the yarn (10) and the background surface (170).

According to the present invention, examples of the digital image sensors (111) include, but are not limited to, semiconductor charge-coupled devices (CCD) or active pixel sensors in complementary metal-oxide-semiconductor (CMOS) or N-type metal-oxide-semiconductor (NMOS) devices. Each of the digital image sensors (111) is equipped with a rolling shutter. Each of the digital image sensors (111) captures a yarn image by scanning across the yarn (10) in multiple horizontal or vertical lines. Use of a rolling shutter in the digital image sensors (111) increases image sampling rate, and reduces cost of manufacturing of the yarn imaging device (100).

The digital image sensors (111) may include lenses (112) which focus the image of the yarn (10) on the digital image sensors (111) and if required provide a predetermined level of magnification of the yarn (10). It may be understood to a person of ordinary skill in the art that the level of magnification required depends on type and dimensions (for e.g. diameter) of the yarn (10) relative to the size of the digital image sensor (111).

The yarn-guides (160) are used to control the path of the yarn (10) in the field of view of the digital image sensors (111). Alternatively, the yarn imaging device (100) may be mounted without yarn-guides in an external assembly such that the yarn (10) lies within the field of view of the first sensing group (110).

The sensing group (110) in this embodiment has two light sources (114) of the same wavelength, to provide symmetrical lighting of the yarn (10).Alternatively, the symmetrical lighting may equally be achieved by different methods of illumination including single light source or multiple light sources that may in turn by direct or indirect.

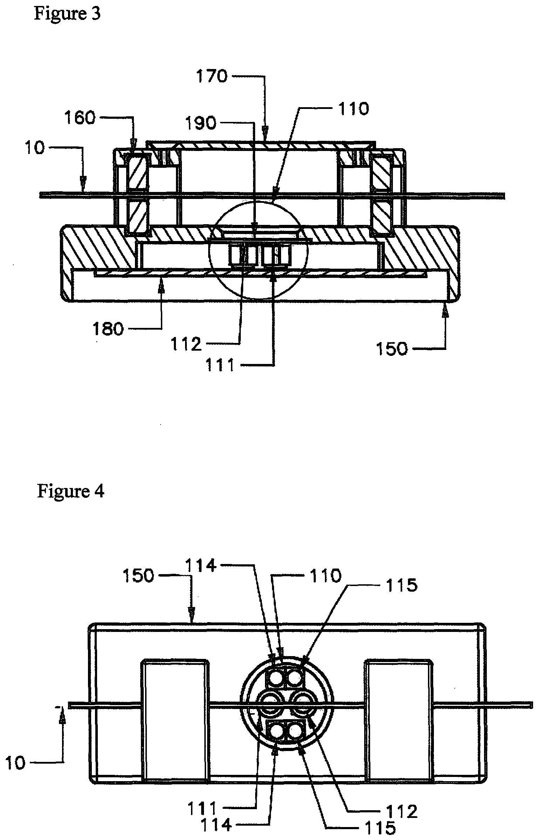

Referring Figure 3 is a section at X-X of the yarn imaging device (100) shown in Figure 2.The yarn (10) runs across the static yarn-guides (160) and the sensing group(110). Shown in this figure, but omitted in Figures 1 and 2 for clarity, is a background surface(170), whilst this is not essential to functioning of the invention, the background surface (170) behind the yarn (10) which may be of a colour and surface finish optimised for the specific application, can improve the contrast of the yarn image relative to the background surface (170) making determination of the yarn profile easier and potentially more accurate.

The yarn imaging device (100) includes a transparent cover (190) which prevents contamination of the digital image sensors (111) and associated components and facilitates easy cleaning.

Referring Figure 4 shows an embodiment with the sensing group (110) but having two pairs of illumination sources (114 and 115) each with different wavelengths of light, wherein said illumination sources (114 and 115) are mixed or switched at a frequency synchronised with the line scan rate of the digital image sensors (111). This embodiment enables identification of foreign matter included in the yarn (10) where the foreign matter is of a similar colour but a different material to the yarn (10) and the wavelength of the one of said illumination sources is optimised to differentiate said foreign matter.

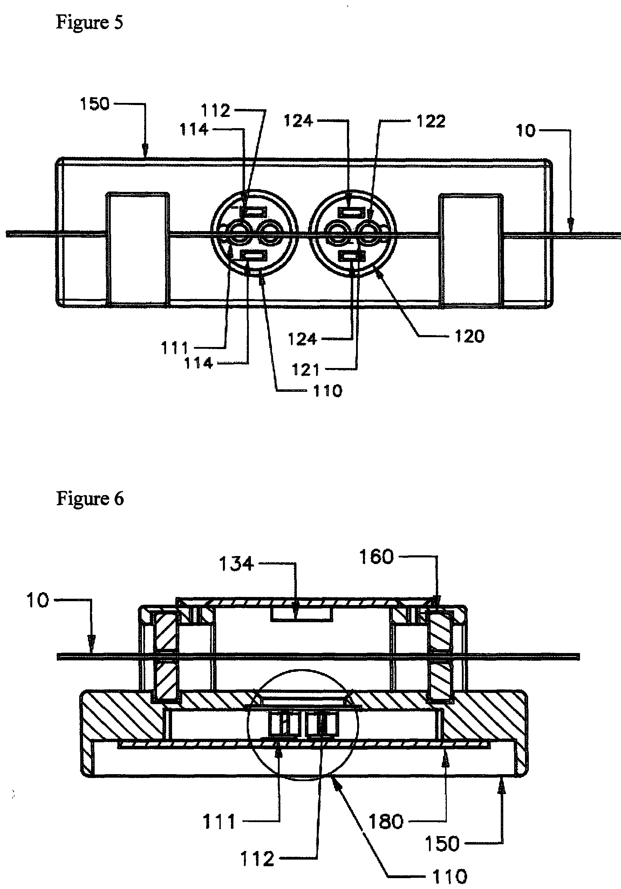

Referring Figure 5 shows a further embodiment with two sensing groups namely first and second sensing groups (110 and 120) each with a single wavelength illumination source (114 and124) respectively i.e. two illumination sources acts at different wavelength. According to the present invention, the illumination source of one of said first and second sensing groups(110 and 120) operating with a wavelength of light can be optimised to differentiate the foreign matter included in the yarn (10) where the foreign matter is of a similar colour but a different material to the yarn (10).

Referring Figure 6 shows an alternative embodiment wherein an Illumination source (134) is the opposite side of the yarn (10) to the first sensing group (110), providing a yarn profile shadow on the digital image sensors (111) to be monitored and enabling a very accurate determination of the yarn profile without any influence of colour or yarn surface effects. The above arrangement can be used together with arrangements shown in Figures 1,2,3, and 5, wherein the illumination sources (114, 124, and 134) may be switched to additionally allow monitoring of the foreign matter.

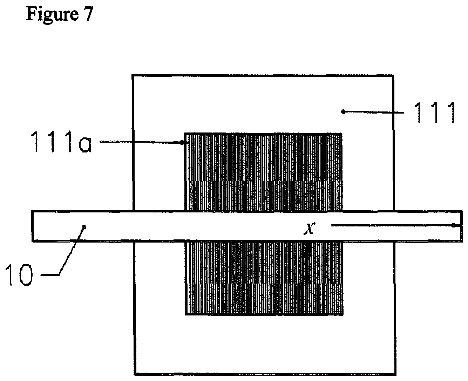

Fig 7 shows a yarn (10) passing in a direction (x) across the digital image sensor (111) with a rolling shutter, where the yarn (10) crosses the image rows of the digital image sensor (111) (one image row shown as 111a). Within the digital image sensor (111) frame update cycle, the image rows are processed sequentially in the direction of the rolling shutter, which may be with or against the yarn direction, updating the yarn image at a frequency equivalent to the line rate of the digital image sensor (111).

In operation, the illumination sources (114) illuminate the yarn (10) and the digital image sensors (111) capture the yarn image. The controller analyses the yarn image and determines one or more characteristics of the yarn (10), examples of which, depending on the process include; diameter, twist, entanglement, broken filaments, evenness, bulk, neps, hairiness, yarn profile, and colour response. However, it may be understood to a person of skill in the art that multiple characteristics of the yarn (10) can be measured using the claimed invention.

The output of said controller may be analogue, digital or communication signals and may be used for; feedback control of the process, grading of the yarn produced, recording the quality of the yarn produced, or any combination of these procedures.

The nouns first, second etc. are used in the specification for understanding purpose and are not limiting the invention to meaning of said nouns. Further, it will be apparent to one of the ordinary skill in the art that many modifications, improvements and sub-combinations of the various embodiments, adaptations and variations can be made to the invention without departing from the scope thereof as claimed in the following claims.

## Claims

1. A yarn imaging device (100) comprising one or more sensing groups (110), wherein each sensing group includes:
at least one illumination source (114) for illuminating a yarn; and
at least one digital image sensor (111) positioned in such a way that said digital image sensor (111), in use, generates an image of the yarn passing in a direction of a yarn path, the image of the yarn being for determination of yarn characteristics,
**characterised in that** the at least one digital image sensor (111) comprises a rolling shutter, and the image rows (111a) of the digital image sensor are arranged such that the yarn path crosses the image rows (111a) of the digital image sensor (111), and wherein the yarn imaging device is configured to generate an updated image of the yarn by, during each frame update cycle of the digital image sensor (111), processing the image rows (111a) sequentially in the direction of the rolling shutter, and the image rows (111a) each comprise a line of photo-sites or photocells that the yarn imaging device is configured to expose and simultaneously process.

2. The yarn imaging device (100) as claimed in claim 1, wherein the yarn imaging device is configured to provide an update rate of the profile image measurement of the yarn equal to the digital image sensor line rate, wherein the digital image sensor line rate is approximately equal to the digital image sensor frame rate multiplied by the number of image rows (111a) of the digital image sensor (111).

3. The yarn imaging device (100) as claimed in one or more of the preceding claims, wherein the sensing group (110) comprises two or more digital image sensors (111) configured to operate out-of-phase to provide continuous imaging of the yarn at the digital image sensor line rate.

4. The yarn imaging device (100) as claimed in one or more of the preceding claims, wherein each digital image sensor (111) includes a lens (112) for focussing the yarn image and/or producing a predetermined level of magnification of the yarn image.

5. The yarn imaging device (100) as claimed in one or more of the preceding claims, wherein the illumination source (114) includes direct or indirect illumination sources (114), and optionally wherein the illumination sources (114) of each sensing group are arranged to generate a reflected image of the yarn in the digital image sensors, or alternatively wherein the illumination source (114) is positioned behind the yarn to generate a shadowed image of the yarn.

6. The yarn imaging device (100) as claimed in one or more of the preceding claims, further comprising a background surface (170), positioned behind the yarn, and optionally wherein the background surface (170) has a colour and a surface texture to optimise the level of contrast in the yarn image.

7. The yarn imaging device (100) as claimed in one or more of the preceding claims, wherein the yarn characteristics include, but are not limited to, diameter, density, evenness, bulk, broken filaments, slubs, neps, hairiness, and twist.

8. The yarn imaging device (100) as claimed in one or more of the preceding claims, further comprising yarn-guides to control the position of the yarn within the yarn imaging device, or alternatively wherein the yarn imaging device is located relative to a machine such that the yarn geometry within the machine is used to control the position of the yarn within the yarn imaging device.

9. The yarn imaging device (100) as claimed in one or more of the preceding claims, wherein the yarn imaging device (100) is configured to generate at least one of analogue, digital and communication signals indicative of yarn characteristics.

10. The yarn imaging device (100) claimed in one or more of the preceding claims, wherein the yarn imaging device (100) includes at least one sensing group (110) with multiple illumination sources (114, 115) each of different wavelengths, and wherein the yarn imaging device is configured to mix said illumination sources (114, 115), or the yarn imaging device is configured to switch said illumination sources (114, 115) at a frequency synchronised with a line scan rate of the digital image sensors to facilitate identification of foreign matter within the yarn, and optionally wherein the yarn imaging device (100) includes at least two sensing groups (110, 120), each with separate illumination sources (114, 124) having different wavelengths of light, and wherein the yarn imaging device is configured to compare yarn images from each of said sensing groups (110, 120) to facilitate identification of the foreign matter within the yarn.

11. A yarn imaging device (100) as claimed in any one of the preceding claims, wherein the yarn imaging device includes a yarn positioned in a field of view of said one or more sensing groups.

12. The use of the yarn imaging device (100) as defined in any one of claims 1 to 11 to image yarn in a textile processing machine.

13. The use of the yarn imaging device (100), as defined in any one of claims 1 to 11, to determine the characteristics of a yarn consisting of any of diameter, density, evenness, bulk, broken filaments, slubs, neps, hairiness, and twist

14. A method of determining the characteristics of a yarn consisting of any of diameter, density, evenness, bulk, broken filaments, slubs, neps, hairiness, and twist, the method comprising: providing a yarn imaging device, as defined in any one of claims 1 to 11; providing a yarn; positioning the yarn in a field of view of said one or more sensing groups of the yarn imaging device; and, operating the yarn imaging device to provide image(s) of the yarn to enable determination of the characteristics of the yarn.

15. The method as claimed in claim 14, wherein the method further includes the step of moving the yarn through the field of view of the one or more sensing groups, and/or
wherein the yarn is positioned in a longitudinal direction in the field of view of said one or more sensing groups, and optionally wherein the method further includes the step of moving the yarn in a longitudinal direction through the field of view of the one or more sensing groups, and/or
wherein the yarn imaging device is included in a textile processing machine, and the method further comprises the step of operating the textile processing machine to move the yarn through the field of view of said one or more sensing groups of the yarn imaging device.

## Patentansprüche

1. Garnbildgebungseinrichtung (100), umfassend eine oder mehrere Erfassungsgruppen (110), wobei jede Erfassungsgruppe enthält:
mindestens eine Beleuchtungsquelle (114) zum Beleuchten eines Garns; und
mindestens einen Digitalbildsensor (111), der derart positioniert ist, dass der Digitalbildsensor (111) bei Verwendung ein Bild des Garns erzeugt, das in einer Richtung eines Garnpfads läuft, wobei das Bild des Garns für die Bestimmung von Garncharakteristika gedacht ist,
**dadurch gekennzeichnet, dass** der mindestens eine Digitalbildsensor (111) einen Rolling-Shutter umfasst und die Bildzeilen (111a) des Digitalbildsensors derart angeordnet sind, dass der Garnpfad die Bildzeilen (111a) des Digitalbildsensors (111) kreuzt, und wobei die Garnbildgebungseinrichtung ausgelegt ist zum Erzeugen eines aktualisierten Bilds des Garns durch sequentielles Verarbeiten, während jedes Rahmenaktualisierungszyklus des Digitalbildsensors (111), der Bildzeilen (111a) in der Richtung des Rolling-Shutter, und die Bildzeilen (111a) jeweils eine Linie aus Fotostellen oder Fotozellen umfasst, die zu belichten und gleichzeitig verarbeiten die Garnbildgebungseinrichtung ausgelegt ist.

2. Garnbildgebungseinrichtung (100) nach Anspruch 1, wobei die Garnbildgebungseinrichtung ausgelegt ist zum Bereitstellen einer Aktualisierungsrate der Profilbildmessung des Garns gleich der Digitalbildsensor-Zeilenrate, wobei die Digitalbildsensor-Zeilenrate etwa gleich der Digitalbildsensor-Rahmenrate multipliziert mit der Anzahl von Bildzeilen (111a) des Digitalbildsensors (111) ist.

3. Garnbildgebungseinrichtung (100) nach einem oder mehreren der vorhergehenden Ansprüche, wobei die Erfassungsgruppe (110) zwei oder mehr Digitalbildsensoren (111) umfasst, die ausgelegt sind zum Arbeiten außer Phase zum Bereitstellen einer kontinuierlichen Bildgebung des Garns mit der Digitalbildsensor-Zeilenrate.

4. Garnbildgebungseinrichtung (100) nach einem oder mehreren der vorhergehenden Ansprüche, wobei jeder Digitalbildsensor (111) eine Linse (112) enthält zum Fokussieren des Garnbilds und/oder Erzeugen einer vorbestimmten Vergrößerungshöhe des Garnbilds.

5. Garnbildgebungseinrichtung (100) nach einem oder mehreren der vorhergehenden Ansprüche, wobei die Beleuchtungsquelle (114) direkte oder indirekte Beleuchtungsquellen (114) enthält und wobei optional die Beleuchtungsquellen (114) jeder Erfassungsgruppe angeordnet sind zum Erzeugen eines reflektierten Bilds des Garns in den Digitalbildsensoren oder wobei alternativ die Beleuchtungsquelle (114) hinter dem Garn positioniert ist, um ein abgeschattetes Bild des Garns zu erzeugen.

6. Garnbildgebungseinrichtung (100) nach einem oder mehreren der vorhergehenden Ansprüche, weiter umfassend eine Hintergrundoberfläche (170), die hinter dem Garn positioniert ist, und wobei optional die Hintergrundoberfläche (170) eine Farbe und eine Oberflächentextur zum Optimieren der Kontrasthöhe in dem Garnbild aufweist.

7. Garnbildgebungseinrichtung (100) nach einem oder mehreren der vorhergehenden Ansprüche, wobei die Garncharakteristika unter Anderem Durchmesser, Dichte, Gleichmäßigkeit, Masse, gebrochene Filamente, Knoten, Nissen, Behaartheit und Drillung.

8. Garnbildgebungseinrichtung (100) nach einem oder mehreren der vorhergehenden Ansprüche, weiter umfassend Garnführungen zum Steuern der Position des Garns innerhalb der Garnbildgebungseinrichtung oder wobei alternativ sich die Garnbildgebungseinrichtung relativ zu einer Maschine derart befindet, dass die Garngeometrie innerhalb der Maschine verwendet wird, um die Position des Garns innerhalb der Garnbildgebungseinrichtung zu steuern.

9. Garnbildgebungseinrichtung (100) nach einem oder mehreren der vorhergehenden Ansprüche, wobei die Garnbildgebungseinrichtung (100) ausgelegt ist zum Erzeugen mindestens eines von analogen, digitalen und Kommunikationssignalen, die Garncharakteristika anzeigen.

10. Garnbildgebungseinrichtung (100) nach einem oder mehreren der vorhergehenden Ansprüche, wobei die Garnbildgebungseinrichtung (100) mindestens eine Erfassungsgruppe (110) mit mehreren Beleuchtungsquellen (114, 115) von jeweils unterschiedlichen Wellenlängen enthält, und wobei die Garnbildgebungseinrichtung ausgelegt ist zum Mischen der Beleuchtungsquellen (114, 115), oder die Garnbildgebungseinrichtung ausgelegt ist zum Schalten der Beleuchtungsquellen (114, 115) mit einer mit einer Zeilenscanrate des Digitalbildsensors synchronisierten Frequenz zum Erleichtern der Identifikation von Fremdmaterie innerhalb des Garns, und wobei optional die Garnbildgebungseinrichtung (100) mindestens zwei Erfassungsgruppen (110, 120) jeweils mit separaten Beleuchtungsquellen (114, 124) mit unterschiedlichen Lichtwellenlängen enthält, und wobei die Garnbildgebungseinrichtung ausgelegt ist zum Vergleichen von Garnbildern von jeder der Erfassungsgruppen (110, 120) zum Erleichtern der Identifikation der Fremdmaterie innerhalb des Garns.

11. Garnbildgebungseinrichtung (100) nach einem der vorhergehenden Ansprüche, wobei die Garnbildgebungseinrichtung ein Garn enthält, das in einem Blickfeld der einen oder mehreren Erfassungsgruppen positioniert ist.

12. Verwendung der Garnbildgebungseinrichtung (100), wie in einem der Ansprüche 1 bis 11 definiert, zum Abbilden von Garn in einer Textilverarbeitungsmaschine.

13. Verwendung der Garnbildgebungseinrichtung (100), wie in einem der Ansprüche 1 bis 11 definiert, um die Charakteristika eines Garns zu bestimmen, die aus einem beliebigen von Durchmesser, Dichte, Gleichheit, Masse, gebrochenen Filamenten, Knoten, Nissen, Behaartheit und Drillung bestehen.

14. Verfahren zum Bestimmen der Charakteristika eines Garns, die aus einem beliebigen von Durchmesser, Dichte, Gleichheit, Masse, gebrochenen Filamenten, Knoten, Nissen, Behaartheit und Drillung bestehen, wobei das Verfahren umfasst: Bereitstellen einer Garnbildgebungseinrichtung, wie in einem Ansprüche 1 bis 11 definiert; Bereitstellen eines Garns; Positionieren des Garns in einem Blickfeld der einen oder der mehreren Erfassungsgruppen der Garnbildgebungseinrichtung; und Betreiben der Garnbildgebungseinrichtung zum Liefern von einem oder mehreren Bildern des Garns, um eine Bestimmung der Charakteristika des Garns zu ermöglichen.

15. Verfahren nach Anspruch 14, wobei das Verfahren weiter den Schritt des Bewegens des Garns durch das Blickfeld der einen oder der mehreren Erfassungsgruppen beinhaltet, und/oder
wobei das Garn in einer Längsrichtung in dem Blickfeld der einen oder mehreren Erfassungsgruppen positioniert wird und wobei optional das Verfahren weiter den Schritt des Bewegens des Garns in einer Längsrichtung durch das Blickfeld der einen oder mehreren Erfassungsgruppen beinhaltet, und/oder
wobei die Garnbildgebungseinrichtung in einer Textilverarbeitungsmaschine enthalten ist, und das Verfahren weiter den Schritt des Betreibens der Textilverarbeitungsmaschine zum Bewegen des Garns durch das Blickfeld der einen oder mehreren Erfassungsgruppen der Garnbildgebungseinrichtung umfasst.

## Revendications

1. Dispositif d'imagerie de fil (100) comprenant un ou plusieurs groupes de détection (110), dans lequel chaque groupe de détection comprend :
au moins une source d'éclairage (114) pour éclairer un fil ; et
au moins un capteur d'image numérique (111) positionné de telle manière que ledit capteur d'image numérique (111), en utilisation, génère une image du fil passant dans une direction d'un chemin de fil, l'image du fil étant destinée à la détermination des caractéristiques du fil,
**caractérisé en ce que** l'au moins un capteur d'image numérique (111) comprend un volet roulant, et les rangées d'images (111a) du capteur d'image numérique sont agencées de telle sorte que le chemin de fil croise les rangées d'images (111a) du capteur d'image numérique (111), et où le dispositif d'imagerie de fil est configuré pour générer une image mise à jour du fil en, pendant chaque cycle de mise à jour d'image du capteur d'image numérique (111), traitant les rangées d'images (111a) séquentiellement dans la direction du volet roulant, et les rangées d'images (111a) comprennent chacune une ligne de photosites ou de photocellules que le dispositif d'imagerie de fil est configuré pour exposer et traiter simultanément.

2. Dispositif d'imagerie de fil (100) tel que revendiqué dans la revendication 1, dans lequel le dispositif d'imagerie de fil est configuré pour assurer une fréquence de mise à jour de la mesure d'image de profil du fil égale à la fréquence de ligne du capteur d'image numérique, où la fréquence de ligne du capteur d'image numérique est approximativement égale à la fréquence des images du capteur d'image numérique multipliée par le nombre de rangées d'images (111a) du capteur d'image numérique (111).

3. Dispositif d'imagerie de fil (100) tel que revendiqué dans l'une ou plusieurs des revendications précédentes, dans lequel le groupe de détection (110) comprend deux, ou davantage, capteurs d'image numérique (111) configurés pour fonctionner hors phase afin de fournir une imagerie continue du fil à la fréquence de ligne du capteur d'image numérique.

4. Dispositif d'imagerie de fil (100) tel que revendiqué dans l'une ou plusieurs des revendications précédentes, dans lequel chaque capteur d'image numérique (111) comprend une lentille (112) pour focaliser l'image du fil et/ou produire un niveau prédéterminé de grossissement de l'image du fil.

5. Dispositif d'imagerie de fil (100) tel que revendiqué dans l'une ou plusieurs des revendications précédentes, dans lequel la source d'éclairage (114) comprend des sources d'éclairage directes ou indirectes (114) et, éventuellement, dans lequel les sources d'éclairage (114) de chaque groupe de détection sont agencées pour générer une image réfléchie du fil dans les capteurs d'image numérique ou, alternativement, dans lequel la source d'éclairage (114) est positionnée derrière le fil pour générer une image ombrée du fil.

6. Dispositif d'imagerie de fil (100) tel que revendiqué dans l'une ou plusieurs des revendications précédentes, comprenant en outre une surface d'arrièreplan (170), positionnée derrière le fil et, éventuellement, dans lequel la surface d'arrière-plan (170) a une couleur et une texture de surface destinées à optimiser le niveau de contraste dans l'image du fil.

7. Dispositif d'imagerie de fil (100) tel que revendiqué dans l'une ou plusieurs des revendications précédentes, dans lequel les caractéristiques du fil comprennent, sans s'y limiter, le diamètre, la densité, la régularité, le volume, les filaments cassés, les mèches, les boutons, la pilosité et la torsion.

8. Dispositif d'imagerie de fil (100) tel que revendiqué dans l'une ou plusieurs des revendications précédentes, comprenant en outre des guides de fil pour contrôler la position du fil à l'intérieur du dispositif d'imagerie de fil ou, alternativement, dans lequel le dispositif d'imagerie de fil est situé par rapport à une machine de sorte que la géométrie du fil à l'intérieur de la machine est utilisée pour contrôler la position du fil à l'intérieur du dispositif d'imagerie de fil.

9. Dispositif d'imagerie de fil (100) tel que revendiqué dans l'une ou plusieurs des revendications précédentes, dans lequel le dispositif d'imagerie de fil (100) est configuré pour générer au moins un des signaux analogiques, numériques et de communication indicatifs les caractéristiques du fil.

10. Dispositif d'imagerie de fil (100) tel que revendiqué dans l'une ou plusieurs des revendications précédentes, dans lequel le dispositif d'imagerie de fil (100) comprend au moins un groupe de détection (110) avec plusieurs sources d'éclairage (114, 115), chacune de différentes longueurs d'ondes, et où le dispositif d'imagerie de fil est configuré pour mélanger lesdites sources d'éclairage (114, 115), ou le dispositif d'imagerie de fil est configuré pour commuter lesdites sources d'éclairage (114, 115) à une fréquence synchronisée avec une vitesse de balayage de ligne des capteurs d'image numérique pour faciliter l'identification de matières étrangères dans le fil et, éventuellement, où le dispositif d'imagerie de fil (100) comprend au moins deux groupes de détection (110, 120), chacun avec des sources d'éclairage séparées (114, 124) ayant des longueurs d'ondes de lumière différentes, et où le dispositif d'imagerie de fil est configuré pour comparer les images de fil provenant de chacun desdits groupes de détection (110, 120) pour faciliter l'identification des matières étrangères dans le fil.

11. Dispositif d'imagerie de fil (100), tel que revendiqué dans l'une quelconque des revendications précédentes, dans lequel le dispositif d'imagerie de fil comprend un fil positionné dans un champ de vision desdits un ou plusieurs groupes de détection.

12. Utilisation du dispositif d'imagerie de fil (100), tel que défini dans l'une quelconque des revendications 1 à 11, pour imager un fil dans une machine de traitement de textile.

13. Utilisation du dispositif d'imagerie de fil (100), tel que défini dans l'une quelconque des revendications 1 à 11, pour déterminer les caractéristiques d'un fil comprenant l'un quelconque des éléments suivants : le diamètre, la densité, la régularité, le volume, les filaments cassés, les mèches, les noeuds, la pilosité et la torsion.

14. Procédé de détermination des caractéristiques d'un fil comprenant l'un quelconque des éléments suivants :
le diamètre, la densité, la régularité, le volume, les filaments cassés, les mèches, les boutons, la pilosité et la torsion,
le procédé comprenant les étapes suivantes : fournir un dispositif d'imagerie de fil, tel que défini dans l'une quelconque des revendications 1 à 11 ; fournir un fil ; positionner le fil dans un champ de vision desdits un ou plusieurs groupes de détection du dispositif d'imagerie de fil ; et faire fonctionner le dispositif d'imagerie de fil pour fournir une ou plusieurs images du fil pour permettre la détermination des caractéristiques du fil.

15. Procédé, tel que revendiqué dans la revendication 14, dans lequel le procédé comprend en outre l'étape comprenant de déplacer le fil à travers le champ de vision d'un ou plusieurs groupes de détection, et/ou
dans lequel le fil est positionné dans une direction longitudinale dans le champ de vision desdits un ou plusieurs groupes de détection et, éventuellement, dans lequel le procédé comprend en outre l'étape comprenant de déplacer le fil dans une direction longitudinale à travers le champ de vision des un ou plusieurs groupes de détection, et/ou
dans lequel le dispositif d'imagerie de fil est inclus dans une machine de traitement de textile, et le procédé comprend en outre l'étape comprenant de faire fonctionner la machine de traitement de textile pour déplacer le fil à travers le champ de vision desdits un ou plusieurs groupes de détection du dispositif d'imagerie de fil.
